# EUROPÄISCHE PATENTSCHRIFT

(11) **EP 3 798 581 B1**
(45) Veröffentlichungstag und Bekanntmachung des Hinweises auf die Patenterteilung: **23.11.2022**
(21) Anmeldenummer: 20187749.5
(22) Anmeldetag: 24.07.2020
(51) Int. Cl.: G01F 1/06, G01F 1/075

(54) **DURCHFLUSSMESSGERÄT UND FLÜGELRAD HIERFÜR**
FLOW METER AND IMPELLER FOR SAME
DÉBITMÈTRE ET ROUE À AUBES ASSOCIÉE

(30) Priorität: 26.09.2019 DE 202019105346 U
(43) Veröffentlichungstag der Anmeldung: 31.03.2021
(73) Patentinhaber: E. Wehrle GmbH, 78120 Furtwangen (DE)
(72) Erfinder: Wehrle, Nico, 78141 Schönwald (DE); Hock, Matthias, 78136 Schonach (DE); Pühler, Thomas, 78078 Niedereschach (DE)
(74) Vertreter: Patentanwälte Ruff, Wilhelm, Beier, Dauster & Partner mbB

(56) Entgegenhaltungen:
- EP-A1- 3 477 265
- DE-A1- 10 027 647
- DE-A1-102005 030 983
- DE-A1-102015 112 732
- DE-B4-102008 038 955
- DE-U1- 29 611 212
- DE-U1-202006 005 401

## Beschreibung

Die Erfindung bezieht sich auf ein Durchflussmessgerät mit einem Flügelrad und auf ein dafür verwendbares Flügelrad, das einen Flügelradkörper, der eine Flügelanordnung aufweist und zur Rotation um eine Flügelraddrehachse eingerichtet ist, und ein einteiliges Abtastflächenelement aufweist, das mit dem Flügelradkörper drehfest verbunden ist und einen die Flügelraddrehachse teilringförmig umgebenden Außenrand aufweist.

Durchflussmessgeräte dieser Art werden beispielsweise als Wasserzähler in Gebäuden verwendet, alternativ auch zur Messung des Durchflusses eines Fluids in anderen Anwendungen. Dazu greift das Flügelrad mit seiner Flügelanordnung in einen Fluidströmungskanal ein, der sich typischerweise in einem Gerätegehäuse des Durchflussmessgerätes erstreckt. Wenn im Fluidströmungskanal ein Fluid strömt, versetzt dieses den Flügelradkörper in Rotation um die Flügelraddrehachse, um die das Flügelrad drehbeweglich angeordnet ist. Mit dem Flügelradkörper rotiert dann auch das mit diesem drehfest verbundene Abtastflächenelement, das von einer entsprechenden Messsensorik des Durchflussmessgerätes sensorisch abgetastet werden kann, z.B. berührungsfrei induktiv, wodurch das Durchflussmessgerät in der Lage ist, den Durchfluss des Fluides zu erfassen.

Die Offenlegungsschrift DE 10 2010 055 752 A1 offenbart ein derartiges Flügelrad zum Einsatz in einer Messkammer eines mechanischen Durchflusszählers, wobei dort als Abtastflächenelement eine am Flügelradkörper angespritzte, umspritzte oder hinterspritzte, vorzugsweise metallische Geberschicht mit einer Schichtdicke von ca. 5µm bis 10µm fungiert. Die Geberschicht ist vollflächig ausgeführt und weist einen die Flügelraddrehachse halbringförmig umgebenden Außenrand auf. Ähnliche Flügelräder mit einer solchen vollflächigen, halbringförmigen Geberschicht, die als Beschichtung auf den Flügelradkörper aufgebracht ist, oder alternativ mit einem entsprechenden, separat vom Flügelradkörper vorgefertigten und an diesem fixierten, vollflächigen, halbringförmigen Folienelement sind in den Offenlegungsschriften DE 10 2011 110 026 A1, DE 10 2005 03 983 A1 und EP 3 477 265 A1, der Gebrauchsmusterschrift DE 296 11 212 U1 und der Patentschrift DE 10 2008 038 955 B4 offenbart.

Die Offenlegungsschrift DE 100 27 647 A1 offenbart eine Anordnung zum Detektieren einer Rotation eines Drehelements, welches mit einem Flügelrad bewegungsgekoppelt ist. Das Drehelement ist mit einer Modulatorscheibe gekoppelt, auf dessen Oberfläche eine vollflächige, halbkreisförmige Flächenelektrode aufgebracht ist.

Die Gebrauchsmusterschrift DE 20 2006 005 401 U1 offenbart einen Durchflusssensor mit einer Laufkapsel, in der sich ein drehbar gelagertes Flügelrad befindet, wobei das Flügelrad an seiner Oberseite ein Modulatorblech, das als gewickelter Metallkeil ausgebildet ist, und einen Ausgleichskörper aufweist, der eine durch das Modulatorblech hervorgerufene Unwucht ausgleicht.

Die Patentschrift DE 197 25 806 C2 offenbart einen z.B. für Wasserdurchflussmessgeräte verwendbaren Umdrehungsdetektor mit einem Rotor, der als Abtastflächenelement wenigstens zwei vollflächige Kreissektorelemente mit unterschiedlichen magnetischen Eigenschaften aufweist.

Die Offenlegungsschrift DE 10 2015 112 732 A1 offenbart ein Verfahren zur Auswuchtung einer Lüftervorrichtung, welche zumindest eine um eine Drehachse drehbar gelagerte Lüftereinheit mit einem Flügelrad aufweist. Um eine Unwucht der Lüftereinheit auszugleichen, wird wenigstens ein Teil der Lüftereinheit zumindest teilweise entfernt, wobei es sich bei diesem Teil insbesondere um einen Hohlzylinder handeln kann, mit dessen Außenmantelfläche das Flügelrad stoffschlüssig verbunden ist und in den zwecks Unwuchtausgleich eine Ausnehmung und/oder Vertiefung eingebracht wird.

Für das Abtastflächenelement wird in der Regel eine geringe Dicke angestrebt, um ungünstige Einflüsse auf das Auftriebsverhalten des Flügelrades im Fluidströmungskanal und eine damit einhergehende Beeinträchtigung der Messqualität des Durchflussmessgerätes zu vermeiden. Das Aufbringen einer Beschichtung auf den Flügelradkörper erfordert zumeist einen relativ hohen Fertigungsaufwand, weshalb oftmals die Verwendung dünner, vorzugsweise metallischer Folienelemente als separat vorgefertigte Abtastflächenelemente bevorzugt wird, die am Flügelradkörper fest angebracht werden. Der Verwendung von sehr dünnen Metallfolien sind aber Grenzen gesetzt, vor allem hinsichtlich ihrer Handhabung in der Produktion, ihrer mechanischen Belastbarkeit und ihrer für die Abtastsensorik erforderlichen Abtastqualität, z.B. ihrer induktiven Bedämpfungsqualität für induktiv abtastende Sensorspulen.

Der Erfindung liegt als technisches Problem die Bereitstellung eines für ein Durchflussmessgerät geeigneten Flügelrades der eingangs genannten Art, das sich mit relativ geringem Gewicht und relativ geringem Fertigungsaufwand herstellen lässt und eine ausreichend gute Abtastcharakteristik besitzt, sowie eines mit einem solchen Flügelrad ausgerüsteten Durchflussmessgerätes zugrunde.

Die Erfindung löst dieses Problem durch die Bereitstellung eines Flügelrades mit den Merkmalen des Anspruchs 1 und eines Durchflussmessgerätes mit den Merkmalen des Anspruchs 6. Vorteilhafte Weiterbildungen der Erfindung sind in den Unteransprüchen angegeben, deren Wortlaut hiermit durch Verweis zum Bestandteil der Beschreibung gemacht wird.

Beim erfindungsgemäßen Flügelrad weist das Abtastflächenelement einen Perforationsteil mit einem oder mehreren Perforationsbereichen in seiner vom Außenrand umgrenzten Flächenausdehnung auf. Im Perforationsteil ist das Abtastflächenelement folglich durchlöchert, d.h. das Abtastflächenelement ist nicht vollflächig gebildet, sondern weist einen oder mehrere, voneinander separierte, perforierte Flächenbereiche in seiner vom Außenrand umgrenzten Flächenausdehnung auf. Dadurch kann das Gewicht des Abtastflächenelements gegenüber einem vollflächigen Abtastflächenelement gleicher Flächenausdehnung und gleicher Dicke deutlich verringert werden, typischerweise um den Bruchteil, den der Perforationsteil an der Flächenausdehnung des Abtastflächenelements hat.

Trotz seines Perforationsteils ist das Abtastflächenelement einteilig mit seiner vom Außenrand umgrenzten Flächenausdehnung gebildet. Und da der Perforationsteil des Abtastflächenelements gewichtsreduzierend wirkt, kann das Abtastflächenelement mit so ausreichender Dicke gefertigt sein, dass es auch im Fall einer Vorfertigung als vom Flügelradkörper eigenständiges und an diesem angebrachtes Bauteil problemlos handhabbar ist. Zudem trägt eine ausreichende, nicht zu geringe Dicke des Abtastflächenelements zusammen mit der Einteiligkeit des Abtastflächenelements mit seinem die Flügelraddrehachse teilringförmig umgebenden Außenrand zur Erzielung einer ausreichend guten Abtastcharakteristik für das Abtastflächenelement bei.

In einer Weiterbildung der Erfindung erstreckt sich der Außenrand des Abtastflächenelements über einen Winkelbereich zwischen 160° und 200° um die Flügelraddrehachse. Dies gewährleistet eine für viele Messanwendungen ausreichend gute Abtastcharakteristik des Abtastflächenelements. In für entsprechende Anwendungen bevorzugten Ausführungen erstreckt sich der Außenrand des Abtastflächenelements über einen Winkelbereich zwischen 175° und 185° um die Flügelraddrehachse. In alternativen Ausführungen kann sich der Abtastflächenelement-Außenrand auch über mehr als 200° oder um weniger als 160°um die Flügelraddrehachse teilringförmig erstrecken.

In einer Weiterbildung der Erfindung beträgt die Dicke des Abtastflächenelements zwischen 0,005mm und 0,2mm. Dieser Dickenbereich stellt für viele Anwendungen einen optimalen Kompromiss zwischen größerem Gewicht bei größerer Dicke und schlechterer Handhabbarkeit bei geringerer Dicke dar. Für viele Anwendungen ist eine Dicke des Abtastflächenelements zwischen 0,01mm und 0,05mm optimal. In entsprechenden Anwendungen kann die Dicke auch weniger als 0,005mm oder mehr als 0,2mm betragen. In einer Weiterbildung der Erfindung weist der Perforationsteil des Abtastflächenelements mehrere Perforationsbereiche auf, die über die Flächenausdehnung des Abtastflächenelements hinweg verteilt angeordnet sind. Die Verteilung der voneinander getrennten Perforationsbereiche kann je nach Bedarf und Anwendungsfall regelmäßig oder irregulär bzw. zufällig verteilt sein. Die Perforationsbereiche besitzen in alternativen Ausführungen untereinander eine gleiche Form, z.B. alle eine Kreis- oder Ovalform oder eine gleiche mehreckige Form, oder unterschiedliche Formen, z.B. teilweise eine Kreis- oder Ovalform und teilweise eine mehreckige Form. Alternativ beinhaltet der Perforationsteil nur einen einzigen Perforationsbereich, der in seiner Form und Ausdehnung je nach Anwendung geeignet gewählt ist.

In einer Weiterbildung der Erfindung hat der Perforationsteil des Abtastflächenelements einen Flächenanteil an der Flächenausdehnung des Abtastflächenelements von mindestens 30%, in vorteilhaften Ausführungen von mindestens 40% oder mindestens 45%, z.B. auch ca. 50% oder mehr. Entsprechend lässt sich das Gewicht des Abtastflächenelements gegenüber einer vollflächigen Ausführung gleicher Dicke merklich reduzieren. In alternativen Ausführungen kann der Flächenanteil des Perforationsteils geringer gewählt werden, d.h. weniger als 30% der Flächenausdehnung des Abtastflächenelements.

In einer Weiterbildung der Erfindung umfasst das Durchflussmessgerät ein Gerätegehäuse, indem sich ein Fluidströmungskanal erstreckt, durch den ein Fluid strömen kann, dessen Durchfluss erfasst werden soll. Zusätzlich weist das Durchflussmessgerät eine induktiv arbeitende Messsensorik auf, die im Gerätegehäuse in induktiver Wirkverbindung mit dem Abtastflächenelement angeordnet ist. Damit ermöglicht das Durchflussmessgerät eine induktive Durchflussmessung mit dem erfindungsgemäßen Flügelrad.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine Draufsicht auf ein Flügelrad für ein Durchflussmessgerät,
- Fig. 2: eine Schnittansicht längs einer Linie II-II in Fig. 1,
- Fig. 3: eine Detailansicht eines Bereichs III in Fig. 2,
- Fig. 4: eine Perspektivansicht eines mit dem Flügelrad der Fig. 1 bis 3 ausgerüsteten Durchflussmessgerätes,
- Fig. 5: eine Draufsicht auf das Durchflussmessgerät von Fig. 4,
- Fig. 6: eine Schnittansicht längs einer Linie VI-VI in Fig. 5,
- Fig. 7: eine Schnittansicht längs einer Linie VII-VII in Fig. 5 und
- Fig. 8: eine Schnittansicht längs einer Linie VIII-VIII in Fig. 6.

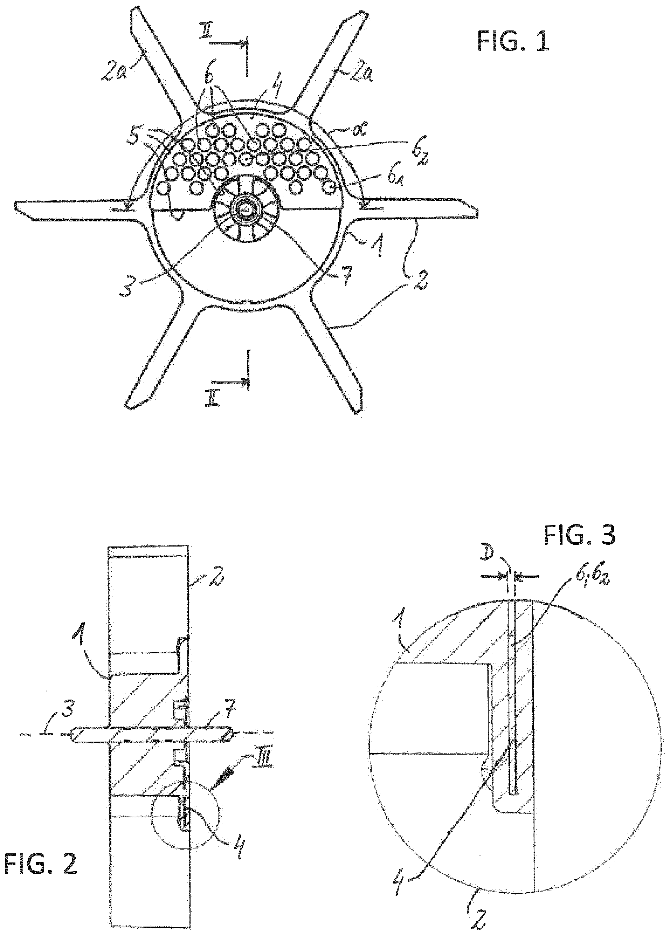

Die Fig. 1 bis 3 veranschaulichen ein zur Verwendung in einem Durchflussmessgerät geeignetes Flügelrad, das einen Flügelradkörper 1 beinhaltet, der eine Flügelanordnung 2 aufweist und zur Rotation um eine Flügelraddrehachse 3 eingerichtet ist. Des Weiteren beinhaltet das Flügelrad ein einteiliges, d.h. aus einem Stück bestehendes, Abtastflächenelement 4, das mit dem Flügelradkörper 1 drehfest verbunden ist und einen die Flügelraddrehachse 3 teilringförmig umgebenden Außenrand 5 aufweist. Zudem beinhaltet das Abtastflächenelement 4 einen Perforationsteil 6 mit einem oder mehreren Perforationsbereichen 6₁, 6₂, ... in seiner vom Außenrand 5 umgrenzten Flächenausdehnung.

Im gezeigten Ausführungsbeispiel ist das Abtastflächenelement 4 als vorzugsweise metallisches, flächiges Folien- bzw. Scheibenelement vorgefertigt und am Flügelradkörper 1 fixiert, z.B. wie aus Fig. 3 ersichtlich, in den Flügelradkörper 1 eingebettet gehalten. Als Material für das Abtastflächenelement 4 ist beispielsweise ein Folienmaterial aus einer Kupferlegierung verwendbar. In einer vorteilhaften Realisierung ist hierbei der Flügelradkörper 1 als Kunststoffspritzgießteil ausgeführt, und das Abtastflächenelement 4 ist in den Flügelradkörper 1 eingespritzt bzw. eingegossen oder umspritzt gehalten. In diesem Fall gelangt das Kunststoffspritzgießmaterial zusätzlich in den oder die Perforationsbereiche 6₁, 6₂, ... des Perforationsteils 6 hinein, wodurch das Abtastflächenelement 4 zusätzlich im als Kunststoffspritzgießteil gefertigten Flügelradkörper 1 verankert ist, was die Fixierung des Abtastflächenelements 4 am Flügelradkörper 1 besonders stabil macht. In alternativen Ausführungen ist das Abtastflächenelement 4 als Beschichtung auf den Flügelradkörper 1 aufgebracht.

Die Flügelanordnung 2 umfasst mindestens einen Flügel 2a, vorzugsweise mehrere Flügel 2a, z.B. wie gezeigt sechs Flügel 2a oder alternativ eine andere Anzahl von Flügeln 2a, die im gezeigten Beispiel radial nach außen am Flügelradkörper 1 abstehen. Vorzugsweise sind die Flügel 2a, wie im gezeigten Beispiel, in Umfangsrichtung äquidistant verteilt um die Flügelraddrehachse 3 herum angeordnet. Die Flügelraddrehachse 3 ist beim gezeigten Flügelrad durch eine zentrische Welle 7 definiert.

In vorteilhaften Ausführungen erstreckt sich der teilringförmige Außenrand 5 des Abtastflächenelements 4 über einen Winkelbereich α zwischen 160° und 200°, in bevorzugten Ausführungen zwischen 175° und 185°, um die Flügelraddrehachse 3. Im gezeigten Beispiel erstreckt sich der Außenrand 5 speziell über einen Winkelbereich α von 180°.

In vorteilhaften Ausführungen besitzt das Abtastflächenelement eine Dicke D zwischen 0,005mm und 0,2mm, bevorzugter zwischen 0,01mm und 0,05mm. In einer vorteilhaften Realisierung beträgt die Dicke D ca. 0,03mm.

In entsprechenden Ausführungen sind die mehreren Perforationsbereiche 6₁, 6₂, ..., wie beim gezeigten Ausführungsbeispiel, über die vom Außenrand 5 umgrenzte Flächenausdehnung des Abtastflächenelements 4 hinweg verteilt angeordnet, wobei sich die Verteilung nach den jeweiligen Gegebenheiten bzw. dem Bedarf richtet. Das verbleibende Material des Abtastflächenelements 4 bildet dadurch eine Art Materialgitterstruktur, welche die geforderten induktiven Abtasteigenschaften bereitstellt. Dies umfasst sowohl Varianten mit einer regelmäßigen Anordnung der Perforationsbereiche 6₁, 6₂, ... als auch Varianten mit unregelmäßiger Anordnung der Perforationsbereiche 6₁, 6₂, ... Dabei kann eine achsensymmetrische Verteilung, wie im gezeigten Ausführungsbeispiel die zur Achse der Schnittlinie II-II in Fig. 1 symmetrische Anordnung der Perforationsbereiche 6₁, 6₂, ..., hinsichtlich Funktionalität und/oder Fertigung von Vorteil sein.

Im gezeigten Ausführungsbeispiel besitzen die einzelnen Perforationsbereiche 6₁, 6₂, ... im Querschnitt eine Kreisform, d.h. sie sind als kreisrunde Bohrungen durch das Abtastflächenelement 4 hindurch gebildet. In alternativen Realisierungen haben die Perforationsbereiche 6₁, 6₂, ... eine andere Querschnittsform, z.B. eine mehreckige Form, wobei in entsprechenden Ausführungsvarianten die verschiedenen Perforationsbereiche 6₁, 6₂ auch voneinander verschiedene Querschnittsformen haben können.

In vorteilhaften Ausführungen hat der Perforationsteil 6 einen Flächenanteil an der Flächenausdehnung des Abtastflächenelements 4 von mindestens 30%, d.h. mindestens 30% der vom Außenrand 5 umgrenzten Gesamtfläche des Abtastflächenelements 4 entfällt auf die Perforationsbereiche 6₁, 6₂, ..., der restliche Flächenanteil entfällt auf das verbleibende Material des Abtastflächenelements 4. In bevorzugten Ausführungen beträgt der Flächenanteil des Perforationsteils 6 an der Gesamtfläche des Abtastflächenelements 4 mindestens 40% oder mindestens 45%, im gezeigten Ausführungsbeispiel beträgt er ca. 50%. Entsprechend ist das Gewicht des Abtastflächenelements 4 im Vergleich zu einer vollflächigen Ausführung bei gleicher Gesamtfläche und gleicher Dicke D um diesen Prozentsatz reduziert.

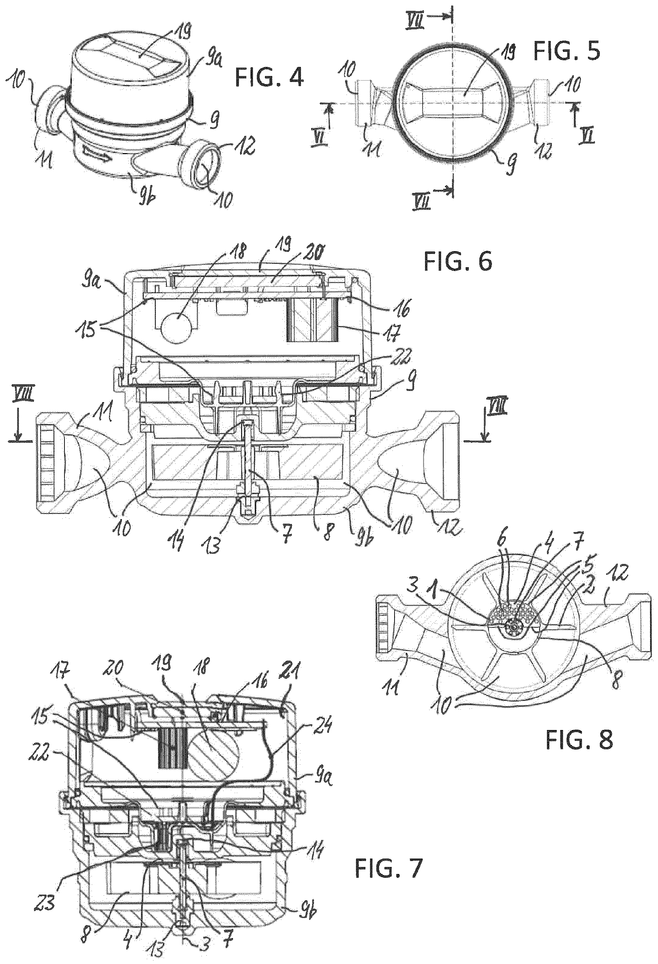

Die Fig. 4 bis 8 veranschaulichen ein Durchflussmessgerät, das beispielsweise als Wasserzähler oder Wärmemengenzähler verwendbar ist und ein Flügelrad 8 enthält, bei dem es sich um das Flügelrad gemäß Fig. 1 bis 3 in der dort gezeigten oder einer alternativen, oben erwähnten, erfindungsgemäßen Ausführung handelt. Das Durchflussmessgerät besitzt ein Gerätegehäuse 9, in dem sich ein Fluidströmungskanal 10 erstreckt. Im gezeigten Beispiel ist das Gerätegehäuse 9 zweiteilig mit einem Gehäusegrundkörper 9b und einem Gehäusedeckel 9a ausgeführt. Das Flügelrad 8 greift mit seiner Flügelanordnung 2 in den Fluidströmungskanal 10 ein. Dazu kann es z.B. mit in einer Gebrauchslage des Durchflussmessgerätes vertikaler Welle 7 im Fluidströmungskanal 10 positioniert sein, der dann z.B. im Wesentlichen horizontal im Gerätegehäuse 9 zwischen einem Gehäuseeinlass 11 und einem Gehäuseauslass 12 verlaufen kann. Im gezeigten Beispiel ist die Welle 7 an einer unteren Lagerbuchse 13 und einer oberen Lagerbuchse 14 im Gerätegehäuse 9 drehbar gelagert.

Das Abtastflächenelement 4 des im Gerätegehäuse 9 angeordneten Flügelrades 8 steht in induktiver Wirkverbindung mit einer induktiv arbeitenden Messsensorik 15. Die induktiv arbeitende Messsensorik 15 ist von einer herkömmlichen Bauart, was daher hier keiner näheren Erläuterungen bedarf. Sie beinhaltet im gezeigten Beispiel eine erste, größere Sensorplatine 16 und eine zweite, kleinere Sensorplatine 22. Die erste Sensorplatine 16 ist oben an der Innenseite des Gehäusedeckels 9a angeordnet. An der ersten Sensorplatine 16 befinden sich z.B. ein Funkkondensator 17, eine durch eine Sichtscheibe 19 im Gehäusedeckel 9a hindurch sichtbare optische Anzeigeeinheit 20 sowie eine der elektrischen Energieversorgung dienende Batterie 18, wobei Fig. 6 eine Variante der Batterie 18 mit kleinerer Bauform und Fig. 7 eine Variante der Batterie 18 mit größerer Bauform zeigen. An der oberen Innenseite des Gehäusedeckels 9a oder an anderer Stelle ist eine Antenne 21 angeordnet.

An der zweiten Seonsorplatine 22 ist eine Abtastinduktivität 23 angeordnet, die dem Abtastflächenelement 4 gegenüberliegt und dieses induktiv abtastet, so dass die Messsensorik 15 die Rotation des Flügelrades 8 erfassen und dadurch die Durchflussmenge eines durch den Fluidströmungskanal 10 hindurchströmenden Fluids bestimmen kann. Eine elektrische Kabelverbindung 24 sorgt für die benötigten elektrischen Leistungs- und/oder Signalverbindungen zwischen den beiden Platinen 16, 22.

Durch die Verwendung des erfindungsgemäßen Flügelrades 8 besitzt das Durchflussmessgerät besonders vorteilhafte Eigenschaften. Das Abtastflächenelement 4 kann aus einem Metallmaterial bestehen, das eine deutlich größere Dichte als Wasser besitzt, was die Verschleißfestigkeit und die induktive Abtastfähigkeit des Abtastflächenelements 4 begünstigt. Gleichzeitig besitzt das Abtastflächenelement 4 aufgrund seines Perforationsteils 6 nur ein relativ geringes Gewicht, was die Reibung in der Lagerung des Flügelrades 8 unabhängig von seiner räumlichen Lage im Fluidströmungskanal 10 gering hält. Aufgrund seines Aufbaus mit dem charakteristischen, einteiligen, perforierten Abtastflächenelement 4 erfährt das Flügelrad 8, wenn es dem Fluid im Fluidströmungskanal 10 ausgesetzt ist, keine Auftriebskräfte und dadurch verursachte Drehmomente in einem die Durchflussmessung störenden Maß.

Wie die gezeigten und die weiteren oben erwähnten Ausführungsbeispiele deutlich machen, stellt die Erfindung in vorteilhafter Weise ein Flügelrad mit einem Abtastflächenelement zur Verfügung, das einteilig ist, einen die Flügelraddrehachse teilringförmig umgebenden Außenrand und einen Perforationsteil aufweist, so dass das Abtastflächenelement einerseits ein relativ geringes Gewicht und andererseits eine ausreichende Abtastfähigkeit besitzt. Das Flügelrad eignet sich insbesondere für Durchflussmessgeräte, die als Wasserzähler oder Wärmemengenzähler ausgelegt sind.

## Patentansprüche

1. Flügelrad, ausgeführt für ein Durchflussmessgerät, mit
- einem Flügelradkörper (1), der eine Flügelanordnung (2) aufweist und zur Rotation um eine Flügelraddrehachse (3) eingerichtet ist, und
- einem einteiligen Abtastflächenelement (4), das mit dem Flügelradkörper (1) drehfest verbunden ist und einen die Flügelraddrehachse (3) teilringförmig umgebenden Außenrand (5) aufweist,
**dadurch gekennzeichnet, dass**
- das Abtastflächenelement (4) einen Perforationsteil (6) mit einem oder mehreren Perforationsbereichen (6₁, 6₂, ...) in seiner vom Außenrand (5) umgrenzten Flächenausdehnung aufweist.

2. Flügelrad nach Anspruch 1, weiter **dadurch gekennzeichnet, dass** sich der Au-ßenrand (5) des Abtastflächenelements (4) über einen Winkelbereich (a) zwischen 160° und 200°, insbesondere zwischen 175° und 185°, um die Flügelraddrehachse (3) erstreckt.

3. Flügelrad nach Anspruch 1 oder 2, weiter **dadurch gekennzeichnet, dass** eine Dicke (D) des Abtastflächenelements (4) zwischen 0,005mm und 0,2mm beträgt, insbesondere zwischen 0,01mm und 0,05mm.

4. Flügelrad nach einem der Ansprüche 1 bis 3, weiter **dadurch gekennzeichnet, dass** der Perforationsteil (6) mehrere Perforationsbereiche (6₁, 6₂, ...) aufweist, die über die Flächenausdehnung des Abtastflächenelements (4) hinweg verteilt angeordnet sind.

5. Flügelrad nach einem der Ansprüche 1 bis 4, weiter **dadurch gekennzeichnet, dass** der Perforationsteil (6) einen Flächenanteil an der Flächenausdehnung des Abtastflächenelements (4) von mindestens 30%, insbesondere mindestens 40% oder mindestens 45%, hat.

6. Durchflussmessgerät mit einem Flügelrad (8) nach einem der Ansprüche 1 bis 5.

7. Durchflussmessgerät nach Anspruch 6, mit einem Gerätegehäuse (9), in dem sich ein Fluidströmungskanal (10) erstreckt, in den die Flügelanordnung (2) des Flügelrades (8) eingreift, und einer im Gerätegehäuse (9) in induktiver Wirkverbindung mit dem Abtastflächenelement (4) angeordneten, induktiv arbeitenden Messsensorik (15).

## Claims

1. Impeller, designed for a flowmeter, comprising
- an impeller body (1) which has a vane arrangement (2) and is configured to rotate about an impeller rotation axis (3), and
- a one-piece scanning area element (4) which is connected in a rotationally fixed manner to the impeller body (1) and has an outer edge (5) surrounding the impeller rotation axis (3) in the shape of part of a ring,
**characterized in that**
- the scanning area element (4) has a perforation part (6) with one or more perforation regions (6₁, 6₂, ...) in its areal extent which is delimited by the outer edge (5) .

2. Impeller according to Claim 1, further **characterized in that** the outer edge (5) of the scanning area element (4) extends over an angular range (a) of between 160° and 200°, in particular between 175° and 185°, about the impeller rotation axis (3).

3. Impeller according to Claim 1 or 2, further **characterized in that** a thickness (D) of the scanning area element (4) is between 0.005 mm and 0.2 mm, in particular between 0.01 mm and 0.05 mm.

4. Impeller according to one of Claims 1 to 3, further **characterized in that** the perforation part (6) has a plurality of perforation regions (6₁, 6₂, ...) which are arranged distributed over the areal extent of the scanning area element (4).

5. Impeller according to one of Claims 1 to 4, further **characterized in that** the perforation part (6) takes up an areal proportion of the areal extent of the scanning area element (4) of at least 30%, in particular at least 40% or at least 45%.

6. Flowmeter comprising an impeller (8) according to one of Claims 1 to 5.

7. Flowmeter according to Claim 6, comprising a device housing (9) in which a fluid flow duct (10) extends, the vane arrangement (2) of the impeller (8) engaging into said fluid flow duct, and an inductively operating measurement sensor system (15) arranged in the device housing (9) in inductive operative connection with the scanning area element (4).

## Revendications

1. Roue à ailettes destinée à un débitmètre, comprenant
- un corps de roue à ailettes (1) qui présente un ensemble d'ailettes (2) et qui est conçu pour tourner autour d'un axe de rotation (3) de la roue à ailettes, et
- un élément surfacique de balayage (4) monobloc qui est relié solidairement en rotation au corps de roue à ailettes (1) et qui présente un bord extérieur (5) entourant en forme d'anneau partiel l'axe de rotation (3) de la roue à ailettes,
**caractérisée en ce que**
- l'élément surfacique de balayage (4) présente une partie perforée (6) avec une ou plusieurs zones de perforation (6₁, 6₂, ...) dans son extension superficielle délimitée par le bord extérieur (5).

2. Roue à ailettes selon la revendication 1,
**caractérisée en outre en ce que** le bord extérieur (5) de l'élément surfacique de balayage (4) s'étend sur une plage angulaire (a) comprise entre 160° et 200°, en particulier entre 175° et 185°, autour de l'axe de rotation (3) de la roue à ailettes.

3. Roue à ailettes selon la revendication 1 ou 2,
**caractérisée en outre en ce qu'**une épaisseur (D) de l'élément surfacique de balayage (4) est comprise entre 0,005 mm et 0,2 mm, en particulier entre 0,01 mm et 0,05 mm.

4. Roue à ailettes selon l'une des revendications 1 à 3,
**caractérisée en outre en ce que** la partie perforée (6) présente plusieurs zones de perforation (6₁, 6₂, ...) réparties sur l'extension superficielle de l'élément surfacique de balayage (4).

5. Roue à ailettes selon l'une des revendications 1 à 4,
**caractérisée en outre en ce que** la partie perforée (6) présente une proportion de surface sur l'extension superficielle de l'élément surfacique de balayage (4) d'au moins 30 %, en particulier d'au moins 40 % ou d'au moins 45 %.

6. Débitmètre comportant une roue à ailettes (8) selon l'une des revendications 1 à 5.

7. Débitmètre selon la revendication 6, comprenant un boîtier d'appareil (9) dans lequel s'étend un canal d'écoulement de fluide (10) dans lequel s'engage l'ensemble d'ailettes (2) de la roue à ailettes (8), et un ensemble de capteurs de mesure (15) à fonctionnement inductif disposé dans le boîtier d'appareil (9) en liaison active inductive avec l'élément surfacique de balayage (4).
